# EUROPEAN PATENT APPLICATION

(11) **EP 4 671 004 A1**
(43) Date of publication of application: **31.12.2025**
(21) Application number: 24184340.8
(22) Date of filing: 25.06.2024
(51) Int. Cl.: B60G 17/017, B66F 7/00

(54) **PREPARING FOR A LIFT OPERATION OF A VEHICLE**

(71) Applicant: VOLVO TRUCK CORPORATION, 405 08 Göteborg (SE)
(72) Inventor: QUIBRIAC, Yann, 69007 LYON (FR); MAITRE, Julien, 38200 CHUZELLES (FR)
(74) Representative: Ström & Gulliksson AB

(57) **Abstract**

A computer system comprising processing circuitry configured to receive a request for a lift operation of a vehicle by a lift mechanism, verify a suspension system of the vehicle as being lowered to lower a centre of gravity of the vehicle, and enable operation of the lift mechanism in response to verifying the suspension system as being lowered.

## Description

### TECHNICAL FIELD

The disclosure relates generally to vehicle maintenance. In particular aspects, the disclosure relates to preparing for a lift operation of a vehicle. The disclosure can be applied in heavy-duty vehicles, such as trucks, buses, and construction equipment. In particular, the disclosure can be applied in multi-unit vehicle combinations with distributed propulsion and energy storage. Although the disclosure may be described with respect to a particular vehicle, the disclosure is not restricted to any particular vehicle.

### BACKGROUND

In vehicle maintenance, it often necessary to lift one or both sides of the vehicle in order to access components of the vehicle that require examination or service. For heavy-duty vehicles, this can be achieved using lift mechanisms such as column lifts. However, if the vehicle and the lift mechanism are not in the appropriate configuration before a lift operation (raising or lowering of the vehicle) is performed, the vehicle can be unstable on the lift mechanism and the lift operation can cause damage to the vehicle.

It is therefore desired to develop a solution for vehicle maintenance, and in particular lift operation, that addresses or at least mitigates some of these issues.

### SUMMARY

This disclosure provides systems, methods and other approaches for preparing for a lift operation by a lift mechanism for a vehicle, in which it is ensured that the vehicle and the lift mechanism are in the appropriate configuration before a lift operation is performed. In particular, it is verified that a suspension system is lowered to lower a centre of gravity of the vehicle is in the correct configuration for a raising or lowering operation. It may also be verified that a braking system and/or gearbox of the vehicle are in the correct configuration, that a support element of the lift mechanism is outside a threshold clearance from a wheel of the vehicle, and/or that no physical entities are within a threshold proximity of the vehicle. By checking important aspects of the lift process and automatically ensuring that the vehicle and the lift mechanism are in an appropriate configuration before a lift mechanism is operated, an operation of the lift mechanism can be performed in a safe and efficient manner.

According to a first aspect of the disclosure, there is provided a computer system comprising processing circuitry configured to receive a request for a lift operation of a vehicle by a lift mechanism, verify a suspension system of the vehicle as being lowered to lower a centre of gravity of the vehicle, and enable operation of the lift mechanism in response to verifying the suspension system as being lowered.

The first aspect of the disclosure may seek to provide a computer system that can check important aspects of a lift process and automatically ensure that a vehicle and a lift mechanism are in an appropriate configuration before a lift mechanism is operated. In particular, by lowering a centre of gravity of the vehicle, the vehicle is put in a more stable configuration and the risk of the vehicle tipping over is reduced. In this way, an operation of the lift mechanism (i.e. raising or lowering of the vehicle by the lift mechanism) can be performed in a safe and efficient manner.

Optionally in some examples, including in at least one preferred example, verifying the suspension system of the vehicle comprises causing lowering of the suspension system. A technical benefit may include that it can be unilaterally ensured that the suspension system is in the appropriate configuration before the lift mechanism is operated.

Optionally in some examples, including in at least one preferred example, verifying the suspension system of the vehicle comprises requesting a suspension status of the suspension system, and causing lowering of the suspension system in response to determining that the suspension status of the suspension system is raised. A technical benefit may include that the suspension system status can be checked and updated if necessary.

Optionally in some examples, including in at least one preferred example, the processing circuitry is further configured to prevent operation of the lift mechanism in response to determining that suspension status of the suspension system is raised. A technical benefit may include that lift operation is not possible when the vehicle is not in an appropriate and/or stable configuration.

Optionally in some examples, including in at least one preferred example, the processing circuitry is further configured to verify a braking system of the vehicle as being disengaged, wherein enabling operation of the lift mechanism in response to verifying the suspension system as being lowered further comprises enabling operation of the lift mechanism in response to verifying the suspension system as being lowered and verifying the braking system as being disengaged. A technical benefit may include ensuring that wheels of the vehicle are free to move, meaning they can settle in a support fork of the lift mechanism. This reduces the risk of instability of the vehicle when the lift mechanism is operated.

Optionally in some examples, including in at least one preferred example, verifying the braking system of the vehicle as being disengaged comprises causing disengagement of the braking system. A technical benefit may include that it can be unilaterally ensured that the braking system is in the appropriate configuration before the lift mechanism is operated.

Optionally in some examples, including in at least one preferred example, verifying the braking system of the vehicle as being disengaged comprises requesting an engagement status of the braking system, and causing disengagement of the braking system in response to determining that the engagement status comprises the braking system being engaged. A technical benefit may include that the braking system status can be checked and updated if necessary.

Optionally in some examples, including in at least one preferred example, the processing circuitry is further configured to verify that a support element of the lift mechanism is positioned outside a threshold clearance from a wheel of the vehicle, and wherein enabling operation of the lift mechanism in response to verifying the suspension system as being lowered further comprises enabling operation of the lift mechanism in response to verifying the suspension system as being lowered and verifying that the lift mechanism is positioned outside the threshold clearance from the wheel. A technical benefit may include ensuring that a support element is sufficiently distant from the wheel to prevent damage to the wheel during a lift operation.

Optionally in some examples, including in at least one preferred example, verifying that the support element of the lift mechanism is positioned outside the threshold clearance from the wheel of the vehicle comprises causing the support element to be moved outside the threshold clearance. A technical benefit may include that it can be unilaterally ensured that the support element is sufficiently distant from the wheel before the lift mechanism is operated.

Optionally in some examples, including in at least one preferred example, verifying that the support element of the lift mechanism is positioned outside the threshold clearance from the wheel of the vehicle comprises receiving data from a camera system of the vehicle, a proximity sensor of the vehicle, or a proximity sensor of the support element, the data indicating a current distance between the wheel and the support element, and causing the support element to be moved outside the threshold clearance in response to determining that the current distance is less than the threshold clearance. A technical benefit may include that the position of the support element can be checked and updated if necessary.

Optionally in some examples, including in at least one preferred example, the processing circuitry is configured to determine if the current distance between the wheel and the support element is less than the threshold clearance based on data from the camera system using one or more image processing techniques. A technical benefit may include that existing infrastructure on the vehicle can be used to determine if the support element is in an appropriate position.

According to a second aspect of the disclosure, there is provided a vehicle comprising the computer system of any preceding claim. The second aspect of the disclosure may seek to provide a vehicle capable of checking important aspects of a lift process and automatically ensuring that the vehicle and a lift mechanism are in an appropriate configuration before a lift mechanism is operated

According to a third aspect of the disclosure, there is provided a computer-implemented method comprising receiving, by processing circuitry of a computer system, a request for a lift operation of a vehicle by a lift mechanism, verifying, by the processing circuitry, a suspension system of the vehicle as being lowered to lower a centre of gravity of the vehicle, and enabling, by the processing circuitry, operation of the lift mechanism in response to verifying the suspension system as being lowered.

The third aspect of the disclosure may seek to provide a computer-implemented method that can check important aspects of a lift process and automatically ensure that a vehicle and a lift mechanism are in an appropriate configuration before the lift mechanism is operated. In particular, by lowering a centre of gravity of the vehicle, the vehicle is put in a more stable configuration and the risk of the vehicle tipping over is reduced. In this way, an operation of the lift mechanism (i.e. raising or lowering of the vehicle by the lift mechanism) can be performed in a safe and efficient manner.

According to a fourth aspect of the disclosure, there is provided a computer program product comprising program code for performing, when executed by processing circuitry, the computer-implemented method of the third aspect. The fourth aspect of the disclosure may seek to enable new vehicles and/or legacy vehicles to be conveniently configured, by software installation/update, to check important aspects of a lift process and automatically ensure that the vehicle and a lift mechanism are in an appropriate configuration before the lift mechanism is operated.

According to a fifth aspect of the disclosure, there is provided a non-transitory computer-readable storage medium comprising instructions, which when executed by processing circuitry, cause the processing circuitry to perform the computer-implemented method of the third aspect. The fifth aspect of the disclosure may seek to enable new vehicles and/or legacy vehicles to be conveniently configured, by software installation/update, to check important aspects of a lift process and automatically ensure that the vehicle and a lift mechanism are in an appropriate configuration before the lift mechanism is operated.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** schematically shows a workshop environment for vehicle maintenance according to an example of the disclosure.
**FIG. 2** schematically shows a vehicle that may be lifted by a lift mechanism. according to an example of the disclosure.
**FIG. 3** is a flow chart of a computer-implemented method according to an example of the disclosure.
**FIG. 4** schematically shows a top-down view of a support element of a lift mechanism according to an example of the disclosure.
**FIG. 5** schematically shows a top-down view of a workshop environment comprising a vehicle positioned on a lift mechanism according to an example of the disclosure.
**FIG. 6** is a signalling diagram illustrating messages that may be transmitted to prepare for a lift operation by a lift mechanism for a vehicle according to an example of the disclosure.
**FIG. 7** is a schematic diagram of a computer system for implementing examples disclosed herein.

Like reference numerals refer to like elements throughout the description.

### DETAILED DESCRIPTION

The detailed description set forth below provides information and examples of the disclosed technology with sufficient detail to enable those skilled in the art to practice the disclosure.

In vehicle maintenance, it often necessary to lift one or both sides of the vehicle in order to access components of the vehicle that require examination or service. For heavy-duty vehicles, this is achieved using lift mechanisms such as column lifts. However, if the vehicle and the lift mechanism are not in the appropriate configuration before a lift operation (raising or lowering of the vehicle) is performed, the vehicle can be unstable on the lift mechanism and the lift operation can cause damage to the vehicle.

To remedy this, systems and methods are proposed for preparing for a lift operation by a lift mechanism for a vehicle, in which it is ensured that the vehicle and the lift mechanism are in the appropriate configuration before a lift operation is performed. In particular, it is verified that a suspension system is lowered to lower a centre of gravity of the vehicle is in the correct configuration for a raising or lowering operation. It may also be verified that a braking system and/or gearbox of the vehicle are in the correct configuration, that a support element of the lift mechanism is outside a threshold clearance from a wheel of the vehicle, and/or that no physical entities are within a threshold proximity of the vehicle. By checking important aspects of the lift process and automatically ensuring that the vehicle and the lift mechanism are in an appropriate configuration before a lift mechanism is operated, an operation of the lift mechanism can be performed in a safe and efficient manner.

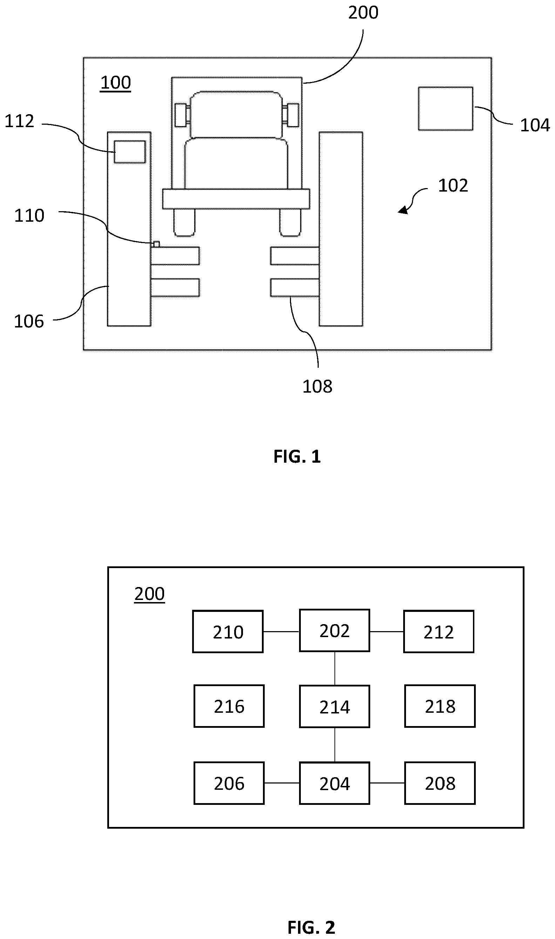

**FIG. 1** illustrates an example workshop environment **100** for vehicle maintenance. The workshop environment **100** includes a lift mechanism **102,** such as a column lift, and a computer system **104.** The lift mechanism **102** is configured to lift heavy-duty vehicles, such as trucks, buses, and construction equipment. Lifting is performed to provide access to the undercarriage, wheels, and other components of a vehicle for maintenance, inspection, and/or repairs. Whilst the following disclosure relates to column lifts, it will be appreciated that the principles disclosed herein may also be applied to other types of lift mechanism **102,** such as piston lifts, scissor lifts, platform lifts, and the like.

The lift mechanism **102** may comprise a number of columns **106.** Column lifts generally comprise multiple columns, typically four or six, but sometimes more, depending on the size and weight of the vehicle to be lifted. The columns **106** may be powered by hydraulic or electro-mechanical systems. The columns **106** may be synchronised electronically and/or wirelessly to ensure that all columns **106** lift at the same rate to maintain the balance of the vehicle during lift operations.

Each column **106** may comprise a support element **108** such as a fork or lifting pad. The support elements **108** are configured to be positioned under a vehicle, for example under a wheel or the chassis of the vehicle, to enable raising of the vehicle. The support elements **108** may comprise one or more sensors **110,** such as proximity sensors, to detect the proximity of a vehicle on the lift mechanism. It will be appreciated that the sensors **110** may additionally or alternatively be implemented on another part of the columns **106.**

The lift mechanism **102** may also comprise one or more control units **112.** The lift mechanism **102** may comprise a single control unit **112** or a respective control unit **112** for each column **106.** An operator can use the control unit **112** to control the raising and lowering of a vehicle, either simultaneously on all columns **106** or independently for fine adjustments. To that end, the control unit **112** may comprise or be connected to a user interface via which an operator can input instructions for the lift mechanism **102.** The user interface may include, for example, a keyboard, mouse, track pad, touch-sensitive display, microphone, and/or camera configured to receive an input from an operator. The control unit **112** may be capable of being communicatively coupled to a vehicle to be lifted by the lift mechanism **102,** and/or to the computer system **104,** as will be discussed below.

The lift mechanism **102** may be a mobile column lift. Unlike fixed lifts that are permanently installed in a workshop environment **100,** a mobile column lifts may be portable, allowing it to be moved around the workshop environment **100** and positioned relative to the vehicle as needed. In a mobile column lift, each column may be equipped with wheels for mobility, allowing them to be easily moved around the workshop environment **100.**

The computer system **104** may be used to receive and provide operating instructions to the lift mechanism **102.** To this end, the computer system **104** may be communicatively coupled to the lift mechanism **102,** for example a control unit **112** of the lift mechanism **102.** This may be achieved by any wired or wireless communication system or process known in the art. The computer system **104** may be an electronic device such as a personal computer or mobile electronic device (e.g. a laptop, tablet, smart phone). The computer system **104** may include a user interface, for example, a keyboard, mouse, track pad, touch-sensitive display, microphone, and/or camera, configured to receive an input from an operator. The computer system **104** may be a server computer or the like configured be communicatively coupled to and receive messages from a remote system (not shown) for control of the lift mechanism **102.**

**FIG. 2** schematically shows an example vehicle **200** that may be lifted by the lift mechanism **102** of **FIG. 1****.** As discussed above, the vehicle **200** may be a heavy-duty vehicle, such as a truck, bus, or construction equipment. The vehicle **200** comprises a chassis **202** and a number of wheels **204** configured to be lifted by the lift mechanism **102.**

The vehicle **200** also comprises one or more suspension systems **206,** for example a suspension system **206** for each axle or wheel **204** of the vehicle **200.** A suspension system **206** may be, for example, a hydraulic or electro-mechanical suspension system. Each suspension system **206** may be operable in one or more modes of operation. One such mode of operation is a so-called "ferry mode", in which the suspension is lowered to lower the centre of gravity of the vehicle **200.** In some examples, the ferry mode may be intended to lower the centre of gravity of the vehicle **200** to its lowest point.

The vehicle **200** may also comprise one or more braking systems **208,** for example a braking system **208** for each axle or wheel **204** of the vehicle **200.** The braking system **208** may be any suitable braking system known the art, capable of partially or fully limiting rotational motion of the axle or wheel **204.**

The vehicle **200** may also comprise one or more image capture systems **210.** In some examples, the image capture systems **210** may include cameras, such as video cameras. For example, the vehicle **200** may comprise one or more forward facing cameras and one or more rearward-facing cameras. The vehicle **200** may comprise one more rearward-facing cameras embodied as side-view cameras mounted on the side of the vehicle **200,** collocated with or in place of traditional wing mirrors.

The vehicle **200** may also comprise one or more radar and/or lidar systems **212,** such as vulnerable road user (VRU) radar and/or lidar systems. These systems **212** transmit electromagnetic waves (e.g. radio or light waves) and detect echoes returned from objects in the vicinity. The time delay between the transmission and reception of the waves is used to calculate the distance to the object.

The vehicle **200** may also comprise one or more gearboxes **214.** The gearbox **214** may be any suitable gearbox the art, capable of facilitating the transfer of power from an engine of the vehicle **200** to its wheels **204.**

The vehicle **200** may also comprise one or more sensors **216,** such as proximity sensors, to detect the proximity of objects, in particular the lift mechanism **102,** to the vehicle **200.** It will be appreciated that the sensors **110** may be implemented at any suitable position on the vehicle **200.**

The vehicle **200** may also comprise one or more vehicle control units **218.** A vehicle control unit **218** may be configured to control operations of the vehicle **200.** In particular, the vehicle control unit **218** may be configured to control operations of the suspension systems **206** and/or braking systems **208** of the vehicle **200.** The vehicle control unit **218** may therefore be communicatively coupled to the suspension systems **206** and/or braking systems **208** by any suitable wired or wireless communication system or process known in the art. The vehicle control unit **218** may also be communicatively coupled to the computer system **104** of the workshop environment **100** and/or a control unit **112** of the lift mechanism **102** by any suitable wired or wireless communication system or process known in the art. The vehicle control unit **218** may include or be connected to a user interface, for example, a keyboard, mouse, track pad, touch-sensitive display, microphone, and/or camera, configured to receive an input from an operator. The user interface may include the one or more image capture systems **210.**

Before a lift operation (i.e. raising or lowering) of a vehicle **200** by the lift mechanism **102,** it should be ensured that the vehicle **200** and/or the lift mechanism **102** are in the appropriate configuration to ensure that the lift operation can be performed in a safe and efficient manner.

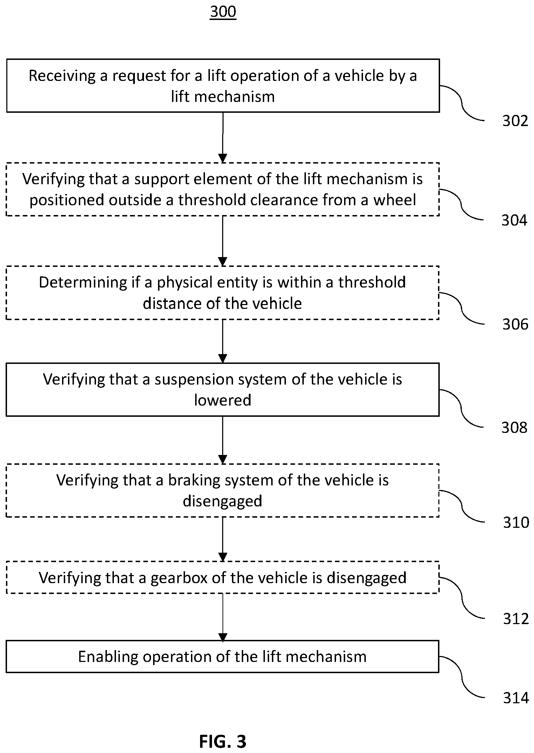

**FIG. 3** is a flow chart of a computer-implemented method **300** according to an example. The method **300** is preparing for a lift operation by a lift mechanism for a vehicle, such as the lift mechanism **102** of **FIG. 1****.** The method **300** ensures that the vehicle, such as the **200** of **FIG. 2****,** is in the appropriate configuration for a lift operation (i.e. raising or lowering of the vehicle **200** by the lift mechanism **102**). The method **300** may be implemented by processing circuitry of a computer system (e.g., any combination of the computer system **104** of the workshop environment **100,** a control unit **112** of the lift mechanism **102,** and/or a vehicle control unit **218**).

At **302,** a request for a lift operation of a vehicle **200** by a lift mechanism **102** is received. For example, a user interface may receive an input from an operator in the form of an interaction with a keyboard, mouse, track pad, or touch-sensitive display, in the form of a voice command received by a microphone, or in the form of a gesture captured by a camera. The user interface may include the user interface of the computer system **104** of the workshop environment **100,** the control unit **112** of the lift mechanism **102,** and/or the vehicle control unit **218.** In another example, the request may be part of an automatic working process that is triggered when the vehicle **200** enters a workshop environment **100** or is loaded onto the lift mechanism **102.** The lift operation may comprise raising or lowering of the vehicle **200** by the lift mechanism **102.**

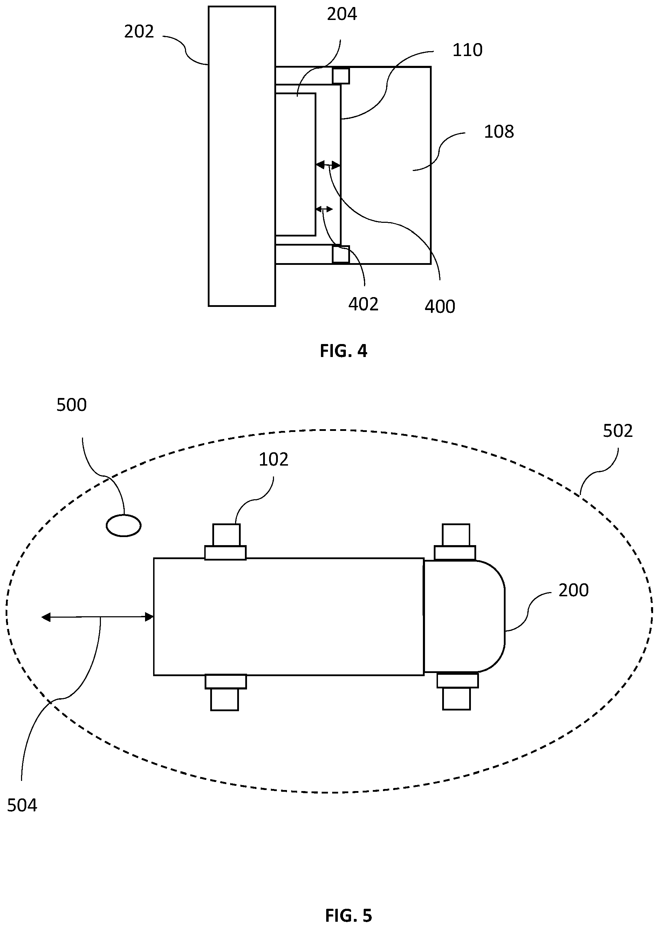

At **304,** it may optionally be verified that a support element **108** of the lift mechanism **102** is positioned outside a threshold clearance from a wheel **204** of the vehicle **200.** **FIG. 4** shows a schematic example of a top-down view of a support element **108,** for example captured by a side view camera (e.g. wing mirror camera) of the vehicle **200.** As shown in **FIG. 4****,** there may be a clearance or gap **400** between the outer surface of the wheel **204,** for example a wheel cover or hub cap, and an inner surface of the support element **108.** In some cases, a support element **108** can damage the wheel **204** during a lift operation if the support element **108** is set too close to the wheel **204.** By verifying that a support element **108** is positioned outside a threshold clearance **402** from a wheel **204,** it is ensured that the vehicle **200** is in the appropriate configuration for a lift operation (i.e. raising or lowering of the vehicle **200** by the lift mechanism **102**). In some examples, verification of the support element **108** may not be necessary for a lowering operation if it has already been performed for a preceding raising operation, as the position of the wheel **204** relative to the support element **108** is unlikely to change while the vehicle **200** is on the lift mechanism **102.** The verification of the support element **108** may be performed in a number of different ways.

In a first example, a unilateral request to cause causing the support element **108** to be moved outside the threshold clearance **402** may be provided. For example, as part of a maintenance process, the computer system **104** of the workshop environment **100 or** the vehicle control unit **218** may send a request to a control unit **112** of the lift mechanism **102.** A current value of the clearance **400** may be provided based on data from a camera system **210** of the vehicle **200,** or a proximity sensor of the vehicle **210** or the lift mechanism **102,** for example a sensor **110** or **216.** One or more image processing techniques known in the art may be used to determine a current value of the clearance **400** based on data from a camera system **210.** The control unit **112** may then determine if the support element **108** is already outside the threshold clearance **402** or not. In the case that it is not, the control unit **112** may send a request to move the support element **108** outside the threshold clearance **402.**

In a second example, a current value of the clearance **400** may be determined and, if the current value of the clearance **400** is larger than the threshold clearance **402,** no further action need be taken. For example, a request may be sent for a current value of the clearance **400.** This may comprise a request from the computer system **104** of the workshop environment **100** or the vehicle control unit **218** to a control unit **112** of the lift mechanism **102.** If, in response to the request, it is determined that current value of the clearance **400** is larger than the threshold clearance **402,** then no further action need be taken.

In a third example, a current value of the clearance **400** may be determined and, if the current value of the clearance **400** is less than the threshold clearance **402,** a corrective action may be taken to move the support element **108** outside the threshold clearance **402.** For example, a request may be sent for a current value of the clearance **400** as discussed above. If, in response to the request, it is determined that the current value of the clearance **400** is less than the threshold clearance **402,** a clearance message for the support element **108** may be transmitted. This may comprise a clearance message sent from the control unit **112** of the lift mechanism **102** to the support element **108.** This may also comprise a clearance message sent from the computer system **104** of the workshop environment **100** or the vehicle control unit **218** to a control unit **112** of the lift mechanism **102.** In this way, it is verified (i.e. ensured) that the support element **108** of the lift mechanism **102** is positioned outside a threshold clearance **402** from a wheel **204** of the vehicle **200.**

In some examples, it may be verified that all support elements **108** of the lift mechanism **102** are positioned outside the threshold clearance **402.** In some examples, it may be ensured that operation of the lift mechanism **102** is prevented if it is determined that one or more support elements **108** re within the threshold clearance **402** of the wheel **204.**

At **306,** it may optionally be determined if a physical entity is within a threshold distance of the vehicle **200.** If such a physical entity **500** is too close to the lift mechanism **102** during lift operation, there is a risk of damage or injury to one or more of the physical entity **500,** the lift mechanism **102,** and the vehicle **200.**

**FIG. 5** shows a schematic example of a top-down view of a workshop environment **100** comprising a vehicle **200** positioned on a lift mechanism **102.** As discussed above, the vehicle **200** may comprise one or more image capture systems **210** such as cameras, and/or one or more radar systems **212.** These systems may have a combined field of view (FOV) **502** and be used to monitor an area around the vehicle **200.** In particular, the image capture systems **210** and radar systems **212** may be used to determine if a physical entity **500** such as a workshop mechanic, a mobile tool cabinet, or the like, is within a threshold distance **504** of the vehicle **200.** The threshold distance **504** is preferably within the combined FOV **502** of the image capture systems **210** and radar systems **212.** By determining if a physical entity is within a threshold distance **504** of the vehicle **200,** an appropriate action can be taken to ensure safe lift operation (i.e. raising or lowering of the vehicle **200** by the lift mechanism **102**). The determination can be performed before both a raising operation and a subsequent lowering operation, to ensure nothing has moved into the area around the vehicle **200** while it is raised. The determination can also be performed during a lift operation to ensure continued safety during raising or lowering of the vehicle **200.**

The determination may be performed in a number of different ways. For example, data may be received from one or more image capture systems **210** and/or one or more radar systems **212.** This data may be received by one or more of the computer system **104** of the workshop environment **100,** the vehicle control unit **218,** and the control unit **112** of the lift mechanism **102,** which may then perform the determination. The determination may be made using any suitable image processing or radar processing techniques known in the art. It will be appreciated that other image capture or radar systems that are not mounted on the vehicle **200** but are present elsewhere in the workshop environment **100** may provide relevant data. If a physical entity **500** is detected within a threshold distance **504** of the vehicle **200,** an alarm may be generated or operation of the lift mechanism **102** may be prevented. It may be preferable to determine that there are no physical entities **500** around the vehicle **200** before performing further actions that may cause movement of the vehicle, such as those described in **308, 310,** and **312.**

At **308,** it is verified that a suspension system **206** of the vehicle **200** is lowered in order to lower a centre of gravity of the vehicle **200.** As discussed above, a ferry mode may be activated that lowers a centre of gravity of the vehicle **200.** When the ferry mode is activated, the vehicle **200** is put in a more stable configuration, as the lower centre of gravity reduces the risk of the vehicle **200** tipping over. Therefore, by verifying that this mode is active, it is ensured that the vehicle **200** is in the appropriate configuration for a lift operation (i.e. raising or lowering of the vehicle **200** by the lift mechanism **102**). The verification of the suspension system **206** may be performed in a number of different ways.

In a first example, a unilateral request to lower the suspension system **206** may be provided. For example, as part of a maintenance process, the computer system **104** of the workshop environment **100** or a control unit **112** of the lift mechanism **102** may send a request to the vehicle control unit **218** to lower the suspension system **206.** The vehicle control unit **218** may then determine if the suspension system **206** is already in a ferry mode or not. In the case that it is not, the vehicle control unit **218** may send a request to the suspension system **206** to active the ferry mode and cause a lowering of the suspension system **206.**

In a second example, a state of the suspension system **206** may be determined and, if the ferry mode is active, no further action need be taken. For example, a request may be sent for a suspension status of the suspension system **206.** This may comprise a request from the vehicle control unit **218** to the suspension system **206.** This may also comprise a request from the computer system **104** of the workshop environment **100** or a control unit **112** of the lift mechanism **102** to the vehicle control unit **218.** If, in response to the request, it is determined that the ferry mode is active, then it is verified that the suspension system **206** is lowered and no further action need be taken.

In a third example, a state of the suspension system **206** may be determined and, if the ferry mode is not active, a corrective action may be taken to lower the suspension system **206** (i.e. activating the ferry mode). For example, a request may be sent for a suspension status of the suspension system **206** as discussed above. If, in response to the request, it is determined that the ferry mode is not active, an activation message for the ferry mode may be transmitted. This may comprise an activation message sent from the vehicle control unit **218** to the suspension system **206.** This may also comprise an activation message sent from the computer system **104** of the workshop environment **100** or a control unit **112** of the lift mechanism **102** to the vehicle control unit **218.** In this way, it is verified (i.e. ensured) that the suspension system **206** is lowered.

In some examples, it may be verified that all suspension systems **206** of the vehicle **200** are lowered. For example, if there is respective suspension system **206** for each axle or wheel **204** of the vehicle **200** it may be verified that all of them are lowered. In some examples, it may be verified that suspension systems **206** for a particular zone or side of the vehicle **200** are lowered. For example, it may be verified that a suspension system **206** for a rear axle or rear wheels **204** of the vehicle **200** is lowered. This may also be the case for suspension systems **206** for a front, left, or right side of the vehicle **200.**

In some examples, it may be ensured that operation of the lift mechanism **102** is prevented if it is determined that one or more of the suspension systems **206** is raised (e.g., the ferry mode is not activated). This may include preventing operation of the lift mechanism **102** if it is determined that one or more of the suspension systems **206** may be further lowered to a lowest height.

At **310,** it may optionally be verified that a braking system **208** of the vehicle **200** is disengaged. When the braking system **208** is disengaged, the associated wheels **204** are free to move, meaning they can settle in a support fork **108** of the lift mechanism **102.** This reduces the risk of instability of the vehicle **200** when the lift is operated. Therefore, by verifying that a braking system **208** is disengaged, it is ensured that the vehicle **200** is in the appropriate configuration for a lift operation (i.e. raising or lowering of the vehicle **200** by the lift mechanism **102**). In some examples, verification of the braking system **208** may not be necessary for a lowering operation if it has already been performed for a preceding raising operation, as the status of the braking system **208** is unlikely to change while the vehicle **200** is on the lift mechanism **102.** The verification of the braking system **208** may be performed in a number of different ways.

In a first example, a unilateral request to disengage the braking system **208** may be provided. For example, as part of a maintenance process, the computer system **104** of the workshop environment **100** or a control unit **112** of the lift mechanism **102** may send a request to the vehicle control unit **218** to disengage the braking system **208.** The vehicle control unit **218** may then determine if the braking system **208** is already disengaged or not. In the case that it is not, the vehicle control unit **218** may send a request to disengage the braking system **208.**

In a second example, a state of the braking system **208** may be determined and, if the braking system **208** is disengaged, no further action need be taken. For example, a request may be sent for an engagement status of the braking system **208.** This may comprise a request from the vehicle control unit **218** to the braking system **208.** This may also comprise a request from the computer system **104** of the workshop environment **100** or a control unit **112** of the lift mechanism **102** to the vehicle control unit **218.** If, in response to the request, it is determined that the braking system **208** is disengaged, then no further action need be taken.

In a third example, a state of the braking system **208** may be determined and, if the braking system **208** is engaged, a corrective action may be taken to disengage the braking system **208.** For example, a request may be sent for an engagement status of the braking system **208** as discussed above. If, in response to the request, it is determined that the braking system **208** is engaged, a disengagement message for the braking system **208** may be transmitted. This may comprise a disengagement message sent from the vehicle control unit **218** to the braking system **208.** This may also comprise a disengagement message sent from the computer system **104** of the workshop environment **100** or a control unit **112** of the lift mechanism **102** to the vehicle control unit **218.** In this way, it is verified (i.e. ensured) that the braking system **208** is disengaged.

In some examples, it may be verified that all braking systems **208** of the vehicle **200** are disengaged. For example, if there is respective braking system **208** for each axle or wheel **204** of the vehicle **200** it may be verified that all of them are disengaged. In some examples, it may be verified that braking systems **208** for a particular zone or side of the vehicle **200** are disengaged. For example, it may be verified that a braking system **208** for a rear axle or rear wheels **204** of the vehicle **200** is disengaged. This may also be the case for braking systems **208** for a front, left, or right side of the vehicle **200.** In some examples, it may be ensured that operation of the lift mechanism **102** is prevented if it is determined that one or more of the braking system **208** is engaged.

By verifying that a braking system **208** is disengaged in this way, not only is stability of the vehicle **200** on the lift mechanism **102** improved, but it is also ensured that an operator does not need to enter the vehicle **200** to disengage the braking system **208.** In many cases, a cab of the vehicle **200** may not be accessible once the vehicle **200** is on the lift mechanism **102,** as the columns **106** of the lift mechanism **102** may block the doors.

At **312,** it may optionally be verified that a gearbox **214** of the vehicle **200** is disengaged. This may enable some movement in the driveline and avoid any tension when lifting the vehicle. Therefore, by verifying that a gearbox **214** is disengaged, it is ensured that the vehicle **200** is in the appropriate configuration for a lift operation (i.e. raising or lowering of the vehicle **200** by the lift mechanism **102**). The verification of the gearbox **214** may be performed in a number of different ways. For example, a unilateral request to disengage the gearbox **214** may be provided, or a state of the gearbox **214** may be determined and any appropriate action be taken. This may be performed in substantially the same manner as for the braking system **208,** as discussed above. In some examples, it may be ensured that operation of the lift mechanism **102** is prevented if it is determined that the gearbox **214** is engaged.

At **314,** operation of the lift mechanism **102** (i.e. raising or lowering of the vehicle **200** by the lift mechanism **102**) is enabled in response to verifying the suspension system **206** as being lowered at **308.** When the suspension system **206** is lowered, the vehicle **200** is put in a more stable configuration, as the lower centre of gravity reduces the risk of the vehicle **200** tipping over. Therefore, response to verifying that an associated mode of the suspension system **206** is active, the lift mechanism **102** may be operated safely.

In some examples, one or more of the other verifications optionally performed at **304, 306, 310,** and **312** may additionally be required to enable operation of the lift mechanism **102.** In one example, operation of the lift mechanism **102** may be enabled in response to verifying the suspension system **206** as being lowered at **308** and verifying that the support element **108** is positioned outside the threshold clearance **402** from the wheel **204** at **304.** In another example, operation of the lift mechanism **102** may be enabled in response to verifying the suspension system **206** as being lowered at **308** and determining that no physical entity **500** is within the threshold distance **504** of the vehicle **200** at **306.** In another example, operation of the lift mechanism **102** may be enabled in response to verifying the suspension system **206** as being lowered at **308** and verifying the braking system **206** as being disengaged at **310.** In another example, operation of the lift mechanism **102** may be enabled in response to verifying the suspension system **206** as being lowered at **308** and verifying that the gearbox **214** is disengaged at **312.** It will be appreciated that any combination of the other verifications optionally performed at **304, 306, 310,** and **312** may additionally be required to enable operation of the lift mechanism **102,** including requiring all verifications performed at **304, 306, 310,** and **312.**

After a lowering operation is complete and the vehicle **200** is back on the ground, it may be desired to engage the braking system **206.** This is so that the columns **106** and support elements **108** can be safely removed from the vehicle **200** without movement of the vehicle **200.** It may be desired to raise the suspension system **206** so that it is in the correct configuration for the vehicle **200** to be driven.

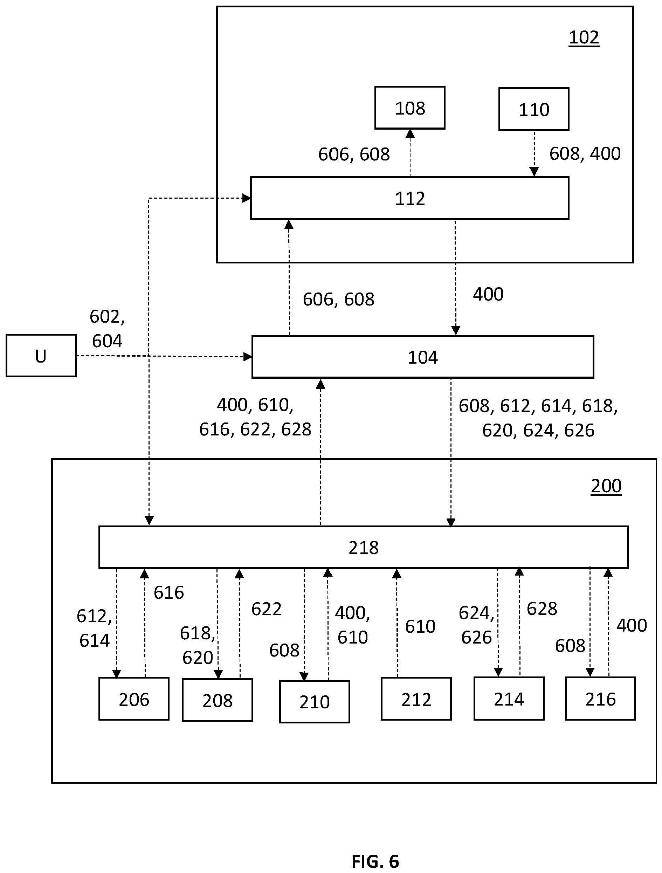

**FIG. 6** is a signalling diagram illustrating the various messages that may be transmitted to prepare for a lift operation by a lift mechanism for a vehicle. As discussed, a request **602** for a lift operation of a vehicle **200** by a lift mechanism **102** is received. The request **602** may be for a raising or lowering of the vehicle **200** by the lift mechanism **102.**For example, a user interface may receive an input **604** representing the request **602** from an operator U. The user interface may include the user interface of the computer system **104** of the workshop environment **100,** the control unit **112** of the lift mechanism **102,** and/or the vehicle control unit **218.** In the following description, it is assumed that the computer system **104** of the workshop environment **100** and acts a coordinating system, although it will be appreciated that similar operations may be performed by the control unit **112** of the lift mechanism **102** and/or the vehicle control unit **218.**

As discussed above, it may optionally be verified that a support element **108** of the lift mechanism **102** is positioned outside a threshold clearance **402** from a wheel **204** of the vehicle **200.** For example, a unilateral request to cause the support element **108** to be moved outside the threshold clearance **402** may be provided. This may comprise a clearance message **606** sent from the control unit **112** of the lift mechanism **102** to the support element **108.** This may also comprise a clearance message sent from the computer system **104** of the workshop environment **100** to the control unit **112** of the lift mechanism **102.** In another example, a request **608** may be sent for a current value of the clearance **400.** This may comprise a request **608** from the computer system **104** of the workshop environment **100** to the control unit **112** of the lift mechanism **102,** and a request **608** from the control unit **112** of the lift mechanism **102** to the support element **108** and/or proximity sensor **110.** This may also comprise a request **608** from the computer system **104** of the workshop environment **100** to the vehicle control unit **218,** and a request **608** from the vehicle control unit **218** to a camera system **210** or proximity sensor **216** of the vehicle **210.** In response, a current value of the clearance **400** may be provided. If it is determined that the current value of the clearance **400** is less than the threshold clearance **402,** a clearance message **606** for the support element **108** may be transmitted.

As also discussed above, it may optionally be determined if a physical entity **500** is within a threshold distance **504** of the vehicle **200.** For example, data **610** may be received from one or more image capture systems **210** and/or one or more radar systems **212.** This data **610** may be transmitted from the image capture systems **210** and/or radar systems **212** to the vehicle control unit **218,** and subsequently to the computer system **104** of the workshop environment **100.**

As also discussed above, it is verified that a suspension system **206** of the vehicle **200** is lowered in order to lower a centre of gravity of the vehicle **200.** For example, a unilateral request to lower the suspension system **206** may be provided. For example, as part of a maintenance process, the computer system **104** of the workshop environment **100** may send a request to the vehicle control unit **218** to lower the suspension system **206.** This may comprise an activation message **612** sent from the computer system **104** of the workshop environment **100** to the vehicle control unit **218,** and sent from the vehicle control unit **218** to the suspension system **206.** In another example, a request **614** may be sent for a status of the suspension system **206.** This may comprise a request from the computer system **104** of the workshop environment **100** to the vehicle control unit **218,** and a request **614** from the vehicle control unit **218** to the suspension system **206.** In response, a status message **616** may be sent back. If it is determined that ferry mode is not active, an activation message **612** sent for the ferry mode may be transmitted.

As also discussed above, it may optionally be verified that a braking system **208** of the vehicle **200** is disengaged. For example, a unilateral request to disengage the braking system **208** may be provided. This may comprise a disengagement message **618** sent from the computer system **104** of the workshop environment **100** to the vehicle control unit **218,** and from vehicle control unit **218** to the braking system **208.** In another example, a request **620** may be sent for an engagement status of the braking system **208.** This may comprise a request from the computer system **104** of the workshop environment **100** to the vehicle control unit **218,** and from the vehicle control unit **218** to the braking system **208.** In response, a status message **622** may be sent back. If it is determined that the braking system **208** is engaged, a disengagement message **618** for the braking system **208** may be transmitted.

As also discussed above, it may optionally be verified that a gearbox **214** of the vehicle **200** is disengaged. For example, a unilateral request to disengage the gearbox **214** may be provided. This may comprise a disengagement message **624** sent from the computer system **104** of the workshop environment **100** to the vehicle control unit **218,** and from the vehicle control unit **218** to the gearbox **214.** In another example, a request **626** may be sent for an engagement status of the gearbox **214.** This may comprise a request **626** sent from the computer system **104** of the workshop environment **100** to the vehicle control unit **218,** and from the vehicle control unit **218** to the gearbox **214.** In response, a status message **628** may be sent back. If it is determined that the gearbox **214** is engaged, a disengagement message **624** for the gearbox **214** may be transmitted.

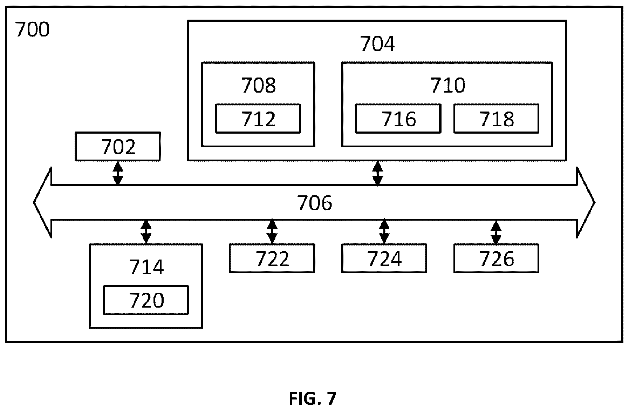

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN, an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or j ointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:
Example 1: A computer system (104, 112, 218, 700) comprising processing circuitry (702) configured to: receive a request (602) for a lift operation of a vehicle (200) by a lift mechanism (102); verify a suspension system (206) of the vehicle (200) as being lowered to lower a centre of gravity of the vehicle (200); and enable operation of the lift mechanism (102) in response to verifying the suspension system (206) as being lowered.
Example 2: The computer system (104, 112, 218, 700) of example 1, wherein verifying the suspension system (206) of the vehicle (200) comprises: causing lowering of the suspension system (206).
Example 3: The computer system (104, 112, 218, 700) of example 2, wherein verifying the suspension system (206) of the vehicle (200) comprises: requesting a suspension status (616) of the suspension system (206); and causing lowering of the suspension system (206) in response to determining that the suspension status of the suspension system is raised.
Example 4: The computer system (104, 112, 218, 700) example 3, wherein the processing circuitry (702) is further configured to prevent operation of the lift mechanism (102) in response to determining that suspension status (616) of the suspension system (206) is raised.
Example 5: The computer system (104, 112, 218, 700) example 3 or 4, wherein the processing circuitry (702) is further configured to prevent operation of the lift mechanism (102) in response to determining that the suspension system (206) may be further lowered to a lowest height.
Example 6: The computer system (104, 112, 218, 700) of any preceding example, wherein the processing circuitry (702) is configured to verify a suspension system (206) for at least one of a front side, rear side, left side, or right side of the vehicle.
Example 7: The computer system (104, 112, 218, 700) of any preceding example, wherein the processing circuitry (702) is further configured to: verify a braking system (208) of the vehicle (200) as being disengaged; wherein enabling operation of the lift mechanism (102) in response to verifying the suspension system (206) as being lowered further comprises: enabling operation of the lift mechanism (102) in response to verifying the suspension system (206) as being lowered and verifying the braking system (208) as being disengaged.
Example 8: The computer system (104, 112, 218, 700) of example 7, wherein verifying the braking system (208) of the vehicle (200) as being disengaged comprises causing disengagement of the braking system (208).
Example 9: The computer system (104, 112, 218, 700) of example 8, wherein verifying the braking system (208) of the vehicle (200) as being disengaged comprises: requesting an engagement status (622) of the braking system (208); and causing disengagement of the braking system (208) in response to determining that the engagement status (622) comprises the braking system (208) being engaged.
Example 10: The computer system (104, 112, 218, 700) of any preceding example, wherein the processing circuitry (702) is further configured to: verify that a support element (108) of the lift mechanism (102) is positioned outside a threshold clearance (402) from a wheel (204) of the vehicle (200); and wherein enabling operation of the lift mechanism (102) in response to verifying the suspension system (206) as being lowered further comprises: enabling operation of the lift mechanism (102) in response to verifying the suspension system (206) as being lowered and verifying that the lift mechanism (102) is positioned outside the threshold clearance (402) from the wheel (204).
Example 11: The computer system (104, 112, 218, 700) of example 10, wherein verifying that the support element (108) of the lift mechanism (102) is positioned outside the threshold clearance (402) from the wheel (204) of the vehicle (200) comprises causing the support element (108) to be moved outside the threshold clearance (402).
Example 12: The computer system (104, 112, 218, 700) of example 11, wherein verifying that the support element (108) of the lift mechanism (102) is positioned outside the threshold clearance (402) from the wheel (204) of the vehicle (200) comprises: receiving data (610) from a camera system (210) of the vehicle (200), a proximity sensor (216) of the vehicle (200), or a proximity sensor (110) of the support element (108), the data (610) indicating a current distance (400) between the wheel (204) and the support element (108); and causing the support element (108) to be moved outside the threshold clearance (402) in response to determining that the current distance (400) is less than the threshold clearance (402).
Example 13: The computer system (104, 112, 218, 700) of example 12, wherein the processing circuitry (702) is configured to determine if the current distance (400) between the wheel (204) and the support element (108) is less than the threshold clearance (402) based on data (610) from the camera system (210) using one or more image processing techniques.
Example 14: The computer system (104, 112, 218, 700) of any preceding example, wherein the processing circuitry (702) is further configured to: determine if a physical entity (500) is within a threshold distance (504) of the vehicle (200) by receiving data (610) from a camera system (210), a radar system (212) and/or a proximity sensor (216); wherein enabling operation of the lift mechanism (102) in response to verifying the suspension system (206) as being lowered further comprises: enabling operation of the lift mechanism (102) in response to verifying the suspension system (206) as being lowered and determining that no physical entity (500) is within the threshold distance (504) of the vehicle (200).
Example 15: The computer system (104, 112, 218, 700) of any preceding example, wherein the processing circuitry (702) is further configured to: verify a gearbox (214) of the vehicle (200) as being disengaged; and wherein enabling operation of the lift mechanism (102) in response to verifying the suspension system (206) as being lowered further comprises: enabling operation of the lift mechanism (102) in response to verifying the suspension system (206) as being lowered and verifying that the gearbox (214) is disengaged.
Example 16: The computer system (104, 112, 218, 700) of example 15, wherein verifying the gearbox (214) of the vehicle (200) as being disengaged comprises causing the gearbox (214) to disengage.
Example 17: The computer system (104, 112, 218, 700) of example 16, wherein verifying the gearbox (214) of the vehicle (200) as being disengaged comprises: requesting an engagement status (628) of the gearbox (214); and causing the gearbox to disengage in response to determining that the engagement status (628) comprises the gearbox (214) being engaged.
Example 18: The computer system (104, 112, 218, 700) of any preceding example, wherein the processing circuitry (702) is configured to receive the request (602) for a lift operation via at least one of an operator input (604) to the vehicle (200), the lift mechanism (102), or from a camera system (210).
Example 19: A computer system (104, 112, 218, 700) comprising processing circuitry (702) configured to: receive a request (602) for a lift operation of a vehicle (200) by a lift mechanism (102); verify that a support element (108) of the lift mechanism (102) is positioned outside a threshold clearance (402) from a wheel (204) of the vehicle (200); and enable operation of the lift mechanism (102) in response to verifying that the lift mechanism (102) is positioned outside the threshold clearance (402).
Example 20: A vehicle (200) comprising the computer system (104, 112, 218, 700) of any preceding example.
Example 21: A computer-implemented method (300) comprising: receiving (302), by processing circuitry (702) of a computer system (104, 112, 218, 700), a request for a lift operation of a vehicle (200) by a lift mechanism (102); verifying (308), by the processing circuitry (702), a suspension system (206) of the vehicle (200) as being lowered to lower a centre of gravity of the vehicle (200); and enabling (314), by the processing circuitry (702), operation of the lift mechanism (102) in response to verifying the suspension system as being lowered.
Example 22: A computer-implemented method (300) comprising: receiving (302), by processing circuitry (702) of a computer system (104, 112, 218, 700), a request for a lift operation of a vehicle (200) by a lift mechanism (102); verifying (304), by the processing circuitry (702), that a support element (108) of a lift mechanism (102) is positioned outside a threshold clearance (402) from a wheel (204) of a vehicle (200); and enabling (314), by the processing circuitry (702), operation of the lift mechanism (102) in response to verifying that the lift mechanism (102) is positioned outside the threshold clearance (402).
Example 23: A computer program product comprising program code for performing, when executed by processing circuitry (702), the computer-implemented method (300) of example 21 or 22.
Example 24: A non-transitory computer-readable storage medium comprising instructions, which when executed by processing circuitry (702), cause the processing circuitry to perform the computer-implemented method (300) of example 21 or 22.

Terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.
It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (104, 112, 218, 700) comprising processing circuitry (702) configured to:
receive a request (602) for a lift operation of a vehicle (200) by a lift mechanism (102);
verify a suspension system (206) of the vehicle (200) as being lowered to lower a centre of gravity of the vehicle (200); and
enable operation of the lift mechanism (102) in response to verifying the suspension system (206) as being lowered.

2. The computer system (104, 112, 218, 700) of claim 1, wherein verifying the suspension system (206) of the vehicle (200) comprises:
causing lowering of the suspension system (206).

3. The computer system (104, 112, 218, 700) of claim 2, wherein verifying the suspension system (206) of the vehicle (200) comprises:
requesting a suspension status (616) of the suspension system (206); and
causing lowering of the suspension system (206) in response to determining that the suspension status of the suspension system is raised.

4. The computer system (104, 112, 218, 700) claim 3, wherein the processing circuitry (702) is further configured to prevent operation of the lift mechanism (102) in response to determining that suspension status (616) of the suspension system (206) is raised.

5. The computer system (104, 112, 218, 700) of any preceding claim, wherein the processing circuitry (702) is further configured to:
verify a braking system (208) of the vehicle (200) as being disengaged;
wherein enabling operation of the lift mechanism (102) in response to verifying the suspension system (206) as being lowered further comprises:
enabling operation of the lift mechanism (102) in response to verifying the suspension system (206) as being lowered and verifying the braking system (208) as being disengaged.

6. The computer system (104, 112, 218, 700) of claim 5, wherein verifying the braking system (208) of the vehicle (200) as being disengaged comprises causing disengagement of the braking system (208).

7. The computer system (104, 112, 218, 700) of claim 6, wherein verifying the braking system (208) of the vehicle (200) as being disengaged comprises:
requesting an engagement status (622) of the braking system (208); and
causing disengagement of the braking system (208) in response to determining that the engagement status (622) comprises the braking system (208) being engaged.

8. The computer system (104, 112, 218, 700) of any preceding claim, wherein the processing circuitry (702) is further configured to:
verify that a support element (108) of the lift mechanism (102) is positioned outside a threshold clearance (402) from a wheel (204) of the vehicle (200); and
wherein enabling operation of the lift mechanism (102) in response to verifying the suspension system (206) as being lowered further comprises:
enabling operation of the lift mechanism (102) in response to verifying the suspension system (206) as being lowered and verifying that the lift mechanism (102) is positioned outside the threshold clearance (402) from the wheel (204).

9. The computer system (104, 112, 218, 700) of claim 8, wherein verifying that the support element (108) of the lift mechanism (102) is positioned outside the threshold clearance (402) from the wheel (204) of the vehicle (200) comprises causing the support element (108) to be moved outside the threshold clearance (402).

10. The computer system (104, 112, 218, 700) of claim 9, wherein verifying that the support element (108) of the lift mechanism (102) is positioned outside the threshold clearance (402) from the wheel (204) of the vehicle (200) comprises:
receiving data (610) from a camera system (210) of the vehicle (200), a proximity sensor (216) of the vehicle (200), or a proximity sensor (110) of the support element (108), the data (610) indicating a current distance (400) between the wheel (204) and the support element (108); and
causing the support element (108) to be moved outside the threshold clearance (402) in response to determining that the current distance (400) is less than the threshold clearance (402).

11. The computer system (104, 112, 218, 700) of claim 10, wherein the processing circuitry (702) is configured to determine if the current distance (400) between the wheel (204) and the support element (108) is less than the threshold clearance (402) based on data (610) from the camera system (210) using one or more image processing techniques.

12. A vehicle (200) comprising the computer system (104, 112, 218, 700) of any preceding claim.

13. A computer-implemented method (300) comprising:
receiving (302), by processing circuitry (702) of a computer system (104, 112, 218, 700), a request for a lift operation of a vehicle (200) by a lift mechanism (102);
verifying (308), by the processing circuitry (702), a suspension system (206) of the vehicle (200) as being lowered to lower a centre of gravity of the vehicle (200); and
enabling (314), by the processing circuitry (702), operation of the lift mechanism (102) in response to verifying the suspension system as being lowered.

14. A computer program product comprising program code for performing, when executed by processing circuitry (702), the computer-implemented method (300) of claim 13.

15. A non-transitory computer-readable storage medium comprising instructions, which when executed by processing circuitry (702), cause the processing circuitry to perform the computer-implemented method (300) of claim 13.
